# EUROPÄISCHE PATENTSCHRIFT

(11) **EP 0 405 143 B1**
(45) Veröffentlichungstag und Bekanntmachung des Hinweises auf die Patenterteilung: **30.08.1995**
(21) Anmeldenummer: 90109930.9
(22) Anmeldetag: 25.05.1990
(51) Int. Cl.: B23K 26/00

(54) **Vorrichtung zum Beschneiden und Stumpfschweissen von Bändern oder in ihren Abmessungen begrenzten Blechen**
Device for trimming and butt-welding strips or sheets of restricted width
Dispositif pour déborder et aboucher des feuillards ou plaques de métal avec dimensions limitées

(30) Priorität: 24.06.1989 DE 3920825
(43) Veröffentlichungstag der Anmeldung: 02.01.1991
(73) Patentinhaber: Oxytechnik Ges. für Systemtechnik mbH, 65760 Eschborn (DE)
(72) Erfinder: Bauer, Helmut, D-6367 Karben 6 (DE); Wilkens, Günter, D-6233 Kelkheim (DE)
(74) Vertreter: Roesner, Werner

(56) Entgegenhaltungen:
- EP-A- 0 151 848
- EP-A- 0 299 358
- CH-A- 390 658
- DE-A- 3 044 350
- DE-A- 3 502 368
- PATENT ABSTRACTS OF JAPAN vol. 10, no. 83 (M-466)(2140) 2 April 1986, & JP-A- 60 223685 (MITSUBISHI DENKI K.K.) 8 November 1985,

## Beschreibung

Die Erfindung betrifft eine Einrichtung zum Parallelschneiden und Zusammenschweißen von Blechen, die in ihren Abmessungen begrenzt sind nach dem Oberbegriff des Anspruches 1 (siehe CH-A-390658).

Solche Vorrichtungen werden unter anderem in der Automobilindustrie zum Herstellen von funktionsgerechten Karosserieteilen durch Zusammenfügen unterschiedlich dicker oder gleichdicker Blechteile eingesetzt. Die Beschaffenheit der Teile, wie z.B. deren Oberflächenbeschichtung, kann hierbei unterschiedlich sein. Die dabei mit der Vorrichtung erzeugten Schweißnähte sollen möglichst nicht dicker als die Bleche sein, damit eine Weiterverarbeitung durch Stanzen oder Kaltverformen nicht beeinträchtigt wird.

Als Schweißquelle wird daher für die stumpf zusammenstoßenden und im wesentlichen bis 3 Millimeter dicken Bleche eine Lasereinrichtung verwendet. Beim Schweißen mit Laserstrahlung entsteht eine sehr schmale Schweißnaht mit nahezu keiner Nahtüberhöhung und der umgebende Werkstoff erwärmt sich weniger als bei herkömmlichen Verfahren. Hinzu kommt, daß die geforderten Eigenschaften bei hoher Schweißgeschwindigkeit erfüllt werden können. Lasereinrichtungen werden daher zunehmend zum Verbinden von Bändern oder Blechen eingesetzt (EP 01 51 848 B1, EP 02 99 358 A1, DE 35 02 368 A1).

Der Einsatz einer Lasereinrichtung als Schweißquelle setzt jedoch eine exakte Schweißnahtvorbereitung voraus. Die zulässige Fuge zwischen den zu verbindenden Teilen hängt von der Blechdicke ab und muß bei dünnen Teilen < 0,1 Millimeter betragen. Auch die Positioniertoleranz der Stoßfuge muß < 0,1 Millimeter sein. Diese Forderungen versucht man durch die Verwendung von doppelschnittig arbeitenden Scheren zu erfüllen, mit denen die Enden der Bänder oder Bleche beschnitten werden. Während dem Beschneiden der Enden sind die Bänder oder Bleche zwischen Spannelementen festgespannt.

Ein hoher Schneidsyklus kann mit einer aus der DE 30 44 350 C3 bekannten Schere verringert werden, die schwenkbar an einem Schlitten befestigt ist, der seinerseits an einem Haltebalken höhenverschiebbar ist. Hierdurch wird die größtmögliche Zugänglichkeit des Arbeitsraumes während des Schweißvorganges ohne ein Ein- bzw. Ausfahren der Schere erreicht. An der schwenkbaren Schere ist eine Schweißunterlage befestigt, die bei in Oberlage angeordneter Schere in Arbeitsposition fixiert ist.

Es wurde ferner bereits vorgeschlagen, Schermesser zu verwenden und diese zusammen mit einer Schweißunterlage zu einer gemeinsamen Baueinheit zusammenzufassen (DE-PS 12 16 073, CH-PS 390 658). Die Schermesser und die Schweißunterlage werden dabei von einem durch zwei zusammen auf- und abbewegbaren Vertikalbalken getragenen oberen Querbalken aufgenommen, wobei die Schermesser an der Unterseite und die Schweißunterlage an der Oberseite des oberen Querbalkens vorgesehen sind. Nach dem Besäumen befindet sich der obere Querbalken mit den Schermessern unterhalb der Bandebene, so daß die Schweißunterlage nunmehr unterhalb der miteinander zu verschweißenden Bandenden liegt.

Bei diesen bekannten Ausführungsformen ist es nicht mehr möglich, z.B. bei einer fehlerhaften Schweißung unmittelbar nach der vorgenommenen Schweißung das Band mittels der unterhalb liegenden Schermesser nochmals zu durchtrennen, so daß diese Ausführung in der Praxis nicht verwirklicht wurde. Von Nachteil ist ferner, daß die Bandenden nicht auf der Schweißunterlage festgespannt werden, sondern zwischen oberen und unteren Spannbackenpaaren.

Aufgabe der Erfindung ist ein gleichmäßiger Schnitt bei dem auch bei hohen Scherkräften ein Verkanten des Scherbalkens sicher vermieden wird und eine schnelle genaue Positionierung der Scherkantenoberseite zum Spannen der nach dem Schnitt zusammengestoßenen Bleche.

Ausgehend von dem im Oberbegriff des Anspruches berücksichtigten Stand der Technik, ist diese Aufgabe erfindungsgemäß gelöst mit den im kennzeichnenden Teil des Anspruches angegebenen Merkmalen.

Mit dem beidseitigen und vorteilhaft gleichzeitigen Antrieb des Scherbalkens über Zylinder kann die Schweißunterlage schnell positioniert werden Sie wird dabei auf einer Ebene mit den Band- bzw. Blechauflagen angeordnet. Das exakte Positionieren übernehmen feineinstellbare Anschläge, die die Bewegung des Scherbalkens begrenzen. Die Bänder bzw. Bleche liegen dann auf der Schweißunterlage auf und werden mit den oberen Spannelementen auf ihr festgespannt. Durch diese Maßnahme wird ein einwandfreies Positionieren der vorzugsweise dünnen Bänder bzw. Bleche möglich, wie es bei Laserschweißungen gefordert wird.

Durch die Erfindung ergibt sich eine freie Zugänglichkeit des Arbeitsraumes nach dem Beschneiden bei relativ kleiner Maschinenhöhe.

Nach Beendigung des Schneidvorganges der Bänder bzw. Bleche sorgt der der Lagerseite zugeordnete Zylinder dafür, daß die Schweißunterlage auf dieser Seite die gewünschte Position einnimmt. Der der anderen Seite zugeordnete Zylinder bewirkt eine zusätzliche Schwenkbewegung, mittels der das vollständige Beschneiden der Band- bzw. Blechenden über deren gesamte Breite und eine waagrechte Positionierung der Schweißunterlage in der Ebene der Bänder bzw. Bleche bewirkt wird.

Durch die Kombinationsführung der Vertikal- und Drehbewegung um einen Bolzen kann dabei ein Verklemmen nicht auftreten, da das der gegenüberliegenden Seite des Scherbalkens zugeordnete Führungselement nur - in Schneidrichtung betrachtet - seitlich geführt wird. Dies eröffnet die Möglichkeit, daß beide Zylinder gleichzeitig - aber bezüglich der Hübe unabhängig voneinander - arbeiten. Hierdurch wird vorteilhaft die Zykluszeit und der Steuerungsaufwand verringert.

Ein weiteres Ausführungsbeispiel ist in der Zeichnung dargestellt und wird im folgenden näher beschrieben.

Es zeigen
- Fig. 1: eine schematische Draufsicht auf die Vorrichtung nach der Erfindung.
- Fig. 2: eine schematische Schnittdarstellung der Schere mit der Schweißunterlage nach dem Beschneiden der Bänder.
- Fig. 3: eine schematische Seitenansicht der schwenkbaren Schere.

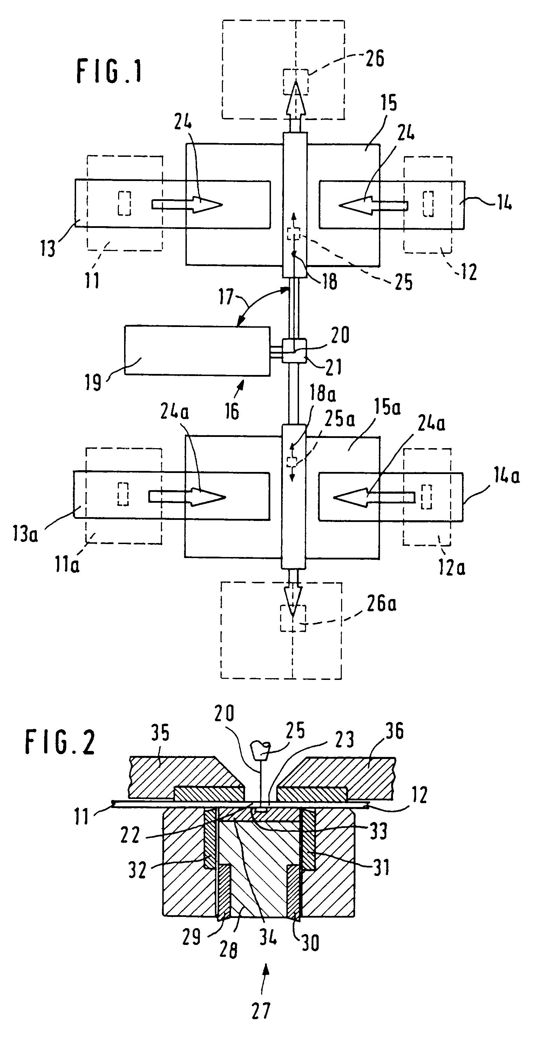

In der Fig. 1 ist eine Einrichtung zum Bearbeiten von Blechen 11, 11 a, 12, 12 a mit begrenzten Abmessungen dargestellt anhand der die Erfindung im folgenden beschrieben wird. Die Bleche werden von einem Stapel mittles Blechzuführvorrichtungen 13, 13 a, 14, 14 a von dem Stapel entnommen und vorzugsweise automatisch zu den parallel zueinander angeordneten Vorrichtungen 15, 15 a zum Beschneiden und Stumpfschweißen gefördert. Zwischen den Vorrichtungen 15, 15 a ist eine Lasereinrichtung 16 unter einem Winkel 17, vorzugsweise unter einem rechten Winkel, zur Schweißrichtung 18, 18 a angeordnet. Der aus dem Laserresonator 19 ausgekoppelte Laserstrahl 20 wird über eine Optik 21 wechselweise zu den entlang der stumpf zusammenstoßenden Enden 22, 23 der Bleche 13, 14 (Fig. 2) bewegbaren Laserköpfen 25, 25 a gelenkt, so daß in beiden Vorrichtungen 15, 15 a nacheinander die Bleche 11, 12 bzw. 11 a, 12 a verschweißt werden.

Danach werden die verbundenen Bleche 11, 12 bzw. 11 a, 12 a an der zur Eintrittsseite des Laserstrahles 21 in die Vorrichtungen 15, 15 a entgegengesetzten Seite, d. h. im wesentlichen rechtwinklig zur Blechzuführrichtung 24 mittels Blechabführungsvorrichtungen 26, 26 a entnommen.

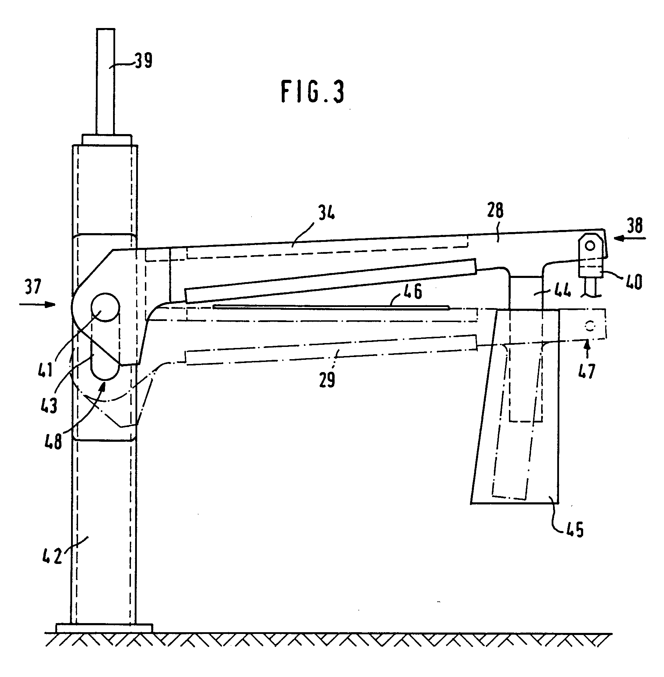

Vor dem Stumpfschweißen der Bleche 11, 12 bzw. 11 a, 12 a werden diese mit einer doppelschnittig arbeitenden Schere 27 beschnitten. Die Schere 27 weist hierzu zwei in einem Abstand voneinander an einem schwenkbaren Scherbalken 28 (Fig. 2 und 3) angeordnete, nach unten gerichtete Schermesser 29, 30 auf. Beim Beschneiden der Enden 22, 23 der Bleche arbeiten die Schermesser 29, 30 zusammen. Durch die von einer oberen Position aus erfolgte Schneidbewegung ist die Schere 27 mit der Oberseite 33 des Scherbalkens 28 unterhalb der Bleche angeordnet. Die untere Endlage des Scherbalkens 28 wird durch Anschläge 47, 48 bestimmt.

Beide Seiten 37, 38 der Schere 27 sind hierzu mit einem Zylinder 39, 40 verbunden. Der Scherbalken 28 wird zum Erzeugen der Schneidbewegung an beiden Seiten 37, 38 gleichzeitig in Richtung der Band- bzw. Blechoberseite 46 bewegt. Die Bewegung der beiden Zylinder 39, 40 erfolgt unabhängig voneinander.

Der Scherbalken 28 ist auf der Seite 37 gabelförmig ausgebildet und umgreift einen Vertikalbalken 42. Durch die Gabel und den Vertikalbalken 42 ist ein Bolzen 41 gesteckt, um den der Scherbalken 28 mit den Schermessern 29, 30 schwenkbar ist. Die vertikale Verschiebbarkeit des Bolzen 41 wird durch eine im Vertikalbalken vorgesehene Langlochführung 43 ermöglicht. Auf der Seite 38 weist der Scherbalken 28 ein Führungselement 44 auf, das zwischen Führungsleisten 45 seitlich geführt wird.

Die auf der Oberseite 33 des Scherbalkens 28 angeordnete Schweißunterlage 34 ist nach dem Beschneiden auf der Ebene der Bleche angeordnet (Strichpunktierte Darstellung in Fig. 3).

Mittels Spannelementen 35, 36 werden die Bleche auf der Schweißunterlage 34 festgespannt und die Bleche mit dem Laserstrahl 20 verbunden. Hierbei wird durch das Festspannen der Bleche auf der Schweißunterlage 34 eine besonders genaue Positionierung erreicht.

Bei fehlerhaften Schweißnähten werden die verbundenen Bleche entweder aus der Vorrichtung 15, 15a gefördert, oder die Lasereinrichtung mittels einer Umschalteinrichtung auf Schneidbetrieb umgestellt. Die Bleche können dann mit dem Laserstrahl 20 getrennt, die Schere 27 in ihre Parkposition zurückgefahren und die Enden der Bleche mit der Schere neu beschnitten werden.

## Patentansprüche

1. Einrichtung zum Parallelschneiden und Zusammenschweißen von sich gegenüberliegenden Kanten (22, 23) von in ihren Abmessungen begrenzten Blechen (11, 11a, 12, 12a) mit einer Schneidvorrichtung und einer Schweißvorrichtung, wobei die Schneidvorrichtung zwei in einem Abstand voneinander an einem Scherbalken (28) angeordnete nach unten gerichteten Schermesser (29,30) aufweist, denen zwei feststehende Gegenmesser (32,31) zugeordnet sind, bei der die Schweißunterlage (34) auf der Oberseite des Scherbalkens (28) angeordnet ist und die Bleche (11, 12) mit Spannbacken (35,36) auf der Schweißunterlage (34) gespannt werden, dadurch gekennzeichnet, daß die Schweißvorrichtung aus einem Laser besteht,
daß dem Scherbalken (28) beidseitig voneinander unabhängige Vertikalantriebe (39,40) zugeordnet sind, daß die Führung des Scherbalkens (28) auf einer Seite (37) als Langlochführung (43) ausgebildet ist, in der ein Bolzen (41) bewegbar ist und um den der Scherbalken (28) schwenkbar ist, daß die untere Endlage des Scherbalkens (28) durch Anschläge (47, 48) derart bestimmt wird, daß die Schweißunterlage (34) nach dem Beschneiden der Bleche (11, 12) auf der Ebene der Bleche (11, 12) angeordnet ist.

## Claims

1. Device for the parallel cutting and welding together of opposing edges (22, 23) of metal sheets (11, 11a, 12, 12a) of limited dimensions, which device has a cutting appliance and a welding appliance, the cutting appliance having two shearing tools (29, 30) which are directed downwards, which are arranged at a distance apart on a shearing beam (28) and which are associated with two stationary mating tools (32, 31), in which cutting appliance the backing strip (34) is arranged on top of the shear beam (28) and the metal sheets (11, 12) are clamped on the backing strip (34) by clamping jaws (35, 36), characterised in that the welding appliance consists of a laser, in that mutually independent drives (39, 40) are associated with the shear beam (28) on both sides, in that the guide of the shear bean (28) is configured on one side (37) as an elongated hole guide (43) in which a pin (41) can be moved and around which the shear beam (28) can be pivoted, in that the lower end position of the shear beam (28) is determined by stops (47, 48) in such a way that the backing strip (34) is arranged in the plane of the metal sheets (11, 12) after the cutting of the metal sheets (11, 12).

## Revendications

1. Dispositif de découpe parallèle et d'assemblage par soudure d'arètes (22, 23) de tôles (11, 11a, 12, 12a) limitées dans leurs dimensions et placées l'une en face de l'autre, au moyen d'un dispositif de découpe et d'un dispositif de soudage, en sachant que le dispositif de découpe présente deux lames (29, 30) orientées vers le bas, espacées l'une de l'autre et disposées sur une poutre de cisaillement (28) à l'opposé desquelles se trouvent deux contre-lames fixes (32, 31), avec une surface d'appui de soudage (34) sur la partie supérieurè de la poutre de cisaillement (28) et en sachant que les tôles (11, 12) sont serrées par des mâchoires (35, 36) sur la surface d'appui de soudage (34), caractérisé par le fait que le dispositif de soudage fonctionne avec un laser, par le fait que des deux côtés de la poutre de cisaillement (28) se trouvent deux entraînements verticaux (39, 40) indépendants l'un de l'autre, par le fait que le guidage de la poutre de cisaillement (28) est réalisé sur un côté (37) comme guidage à trou oblong (43) dans lequel se déplace une tige (41) autour de laquelle la poutre de cisaillement (28) peut pivoter, par le fait que la fin de course inférieure de la poutre de cisaillement (28) est réalisée par des butées (47, 48) de telle manière que la surface d'appui de soudage (34) se trouve au même niveau que les tôles (11, 12) après la découpe de celles-ci (11, 12).
